(19) Europäisches Patentamt / European Patent Office / Office européen des brevets

(11) **EP 3 200 153 B1**

(12) **FASCICULE DE BREVET EUROPEEN**

(45) Date de publication et mention de la délivrance du brevet:
**23.05.2018   Bulletin 2018/21**

(51) Int Cl.:
*G06T 7/254* (2017.01)     *G06K 9/00* (2006.01)
*G06K 9/46* (2006.01)      *G06K 9/52* (2006.01)
*G06T 5/00* (2006.01)

(21) Numéro de dépôt: **17152498.6**

(22) Date de dépôt: **20.01.2017**

(54) **PROCÉDÉ DE DÉTECTION DE CIBLES AU SOL ET EN MOUVEMENT DANS UN FLUX VIDÉO ACQUIS PAR UNE CAMÉRA AÉROPORTÉE**

VERFAHREN ZUR ERKENNUNG VON BODENZIELEN IN BEWEGUNG AUS EINEM VIDEODATENSTROM, WELCHER MIT EINER KAMERA AN BORD EINES FLUGZEUGS AUFGENOMMEN WURDE

METHOD FOR DETECTING TARGETS ON THE GROUND AND IN MOTION, IN A VIDEO STREAM ACQUIRED WITH AN AIRBORNE CAMERA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **26.01.2016   FR 1600125**

(43) Date de publication de la demande:
**02.08.2017   Bulletin 2017/31**

(73) Titulaire: **Thales**
**92400 Courbevoie (FR)**

(72) Inventeurs:
• **GUERRINI, Gilles**
**33608 PESSAC CEDEX (FR)**
• **CAMUS, Fabien**
**33608 PESSAC CEDEX (FR)**
• **RICHARD, Fabien**
**33608 PESSAC CEDEX (FR)**

(74) Mandataire: **Lavoix**
**2, place d'Estienne d'Orves**
**75441 Paris Cedex 09 (FR)**

(56) Documents cités:
**WO-A1-2009/067819      CN-A- 104 408 725**
**JP-A- 2013 142 636      US-A- 5 629 988**
**US-A1- 2014 118 716**

• **DALE J, SCOTT D, DWYER D, THORNTON J: "TARGET TRACKING, MOVING TARGET DETECTION, STABILISATION AND ENHANCEMENT OF AIRBORNE VIDEO", PROCEEDINGS OF SPIE AIRBORNE INTELLIGENCE, SURVEILLANCE, RECONNAISANCE (ISR), SYSTEMS AND APPLICATIONS II, vol. 5787, 3 juin 2005 (2005-06-03), pages 154-165, XP040203904, BELLINGHAM, WA, USA DOI: 10.1117/12.603509**

**Description**

La présente invention a pour domaine celui des procédés de détection de cibles au sol et en mouvement, dans un flux vidéo acquis par une caméra aéroportée.

Une caméra aéroportée est une caméra mobile par rapport au sol, non seulement parce que l'aéronef portant la caméra se déplace par rapport au sol, mais également parce qu'un opérateur contrôle, par exemple depuis une station au sol, les mouvements de la caméra par rapport à l'aéronef, de manière à pouvoir observer une zone particulière survolée par ce dernier. Le flux vidéo acquis est transmis, en temps réel, à la station au sol pour analyse.

La détection des mouvements au sol de tout type de véhicules (véhicule militaire, voiture, deux-roues, etc.) est un renseignement essentiel à extraire du flux vidéo.

La détection automatique de véhicules au sol et en mouvement dans un flux vidéo acquis par une caméra fixe, par exemple montée rigidement sur un mât implanté dans l'environnement, est connue. Le fait que la caméra soit fixe par rapport au sol permet de faire abstraction du décor de la scène observée et de ne traiter que les portions de l'image qui évoluent d'une trame du flux vidéo à la suivante, et qui représentent par conséquent des cibles potentielles.

Pour un flux vidéo acquis par une caméra mobile, la détection des portions de l'image qui évoluent d'une trame à l'autre peut être réalisée automatiquement en mettant en oeuvre une procédure de Harris. Une telle procédure consiste, dans un premier temps, à appliquer un algorithme d'identification des points remarquables sur une image du flux vidéo, puis, dans un second temps, à appliquer un algorithme de reconstruction pour associer des points remarquables identifiés dans l'image considérée, de manière à délimiter des portions de l'image qui correspondent à un objet observé. L'évolution de ces portions d'une image à l'autre permet de déterminer si un objet est en mouvement.

Cependant, un tel algorithme n'est pas suffisant pour discriminer des cibles de petites tailles, en l'occurrence des véhicules observés à distance par une caméra aéroportée.

Mais surtout, un tel algorithme requière un temps de calcul élevé, notamment pour l'association de points remarquables de manière à définir des objets. Un tel temps de calcul n'est pas compatible avec une analyse en temps réel du flux vidéo acquis.

Ainsi, actuellement, le flux vidéo acquis par une caméra aéroportée est affiché sur un écran de la station au sol et l'opérateur analyse visuellement la succession des images pour essayer d'y reconnaître des objets en mouvement. L'opérateur peut être contraint à rester plusieurs heures à réaliser cette analyse visuelle. Son attention ne pouvant pas être maintenue en permanence, la détection de cible de cette manière n'est pas toujours efficace.

Par ailleurs, l'Article J DALE et al. "Target Tracking, Moving Target Detection, Stabilisation and Enhancement of Airbone Video", proceedings of SPIE Airborne Intelligence, Surveillance, Reconnaisance (ISR), Systems and Applications II, vol. 5787, 3 juin 2005, pages154-165, divulgue un procédé de détection automatique et en temps réel de cibles se déplaçant au sol, dans un flux vidéo délivré par une caméra aéroportée.

L'invention a donc pour but de pallier ce problème, en proposant notamment un procédé offrant une aide à l'opérateur en détectant automatiquement et en temps réel, dans le flux vidéo acquis par une caméra embarquée, les cibles constituées par des objets se déplaçant par rapport au décor et en présentant ces cibles potentielles de manière appropriée à l'opérateur.

L'invention a pour objet un procédé de détection de cibles au sol et en mouvement dans un flux vidéo acquis par une caméra numérique aéroportée, caractérisé en ce qu'il comporte les étapes consistant à : traiter une pluralité de trames successives de manière à stabiliser les trames comme si elles avaient été acquises par une caméra fixe ; et comparer deux trames traitées, séparées temporellement l'une de l'autre, de manière à identifier les zones de pixels en mouvement d'une trame à l'autre, les zones de pixels en mouvement constituant des cibles détectées.

Le procédé selon l'invention permet la détection de cibles au sol et en mouvement (notamment les cibles de faible taille en termes de nombre de pixels dans une image acquise) dans un flux vidéo brut provenant d'une caméra portée par un aéronef, le flux vidéo étant dynamique au sens où l'orientation et/ou l'agrandissement de la caméra par rapport au décor évolue(nt) au cours de la prise de vue.

Le procédé est fondé sur la possibilité de faire la différence entre un point au sol et un point d'un objet en mouvement par rapport au sol, à partir de la détermination de leur déplacement relatif, qui évolue de manière distincte à la fois en direction et en intensité.

Suivant des modes particuliers de réalisation, le procédé comporte une ou plusieurs des caractéristiques suivantes, prises isolément ou suivant toutes les combinaisons techniquement possibles :

- l'étape consistant à traiter une pluralité de trames successives comporte une étape de correction d'une erreur relative de parallaxe affectant chaque trame de ladite pluralité de trames successives de manière à obtenir, pour chaque trame, une trame corrigée, cette étape mettant en oeuvre un algorithme de détermination d'une transformation projective permettant de passer de la trame à un instant courant à une trame corrigée associée à une trame à un instant d'échantillonnage précédent.
- l'étape consistant à traiter une pluralité de trames successives comporte une étape de détermination d'un vecteur déplacement de la caméra par rapport au sol, cette étape mettant en oeuvre un algorithme de détermination d'un flot optique permettant de passer d'une trame corrigée courante à une trame corrigée passée séparée de la trame corrigée courante d'un nombre entier s d'instants d'échantillonnage.

- l'algorithme de détermination d'un flot optique utilise une grille homogène de points.
- le nombre entier s est sélectionné entre 5 et 15, de préférence égal à 10.
- une fois déterminé le vecteur déplacement de la caméra par rapport au sol, une transformation correspondante est appliquée à la trame corrigée courante pour compenser l'effet du déplacement de la caméra et obtenir une trame finale superposable à la trame corrigée passée en tant que trame initiale.
- l'étape consistant à comparer deux trames consiste à comparer les trames final et initiale entre elles en réalisant successivement les sous-étapes suivantes consistant à : soustraire pixel à pixel la trame initiale de la trame finale de manière à obtenir, pour chaque pixel, une valeur de distance couleur ; appliquer un seuil en distance couleur, chaque pixel ayant une valeur de distance couleur inférieure ou égale audit seuil, prenant la valeur nulle et chaque pixel ayant une valeur de distance couleur supérieure audit seuil prenant la valeur unité, de manière à obtenir une carte binaire ; et appliquer un algorithme de détermination de contour sur la carte binaire pour regrouper les pixels de valeur unité en zones de pixels en mouvement.
- la carte binaire obtenue à l'issue de la sous-étape d'application d'un seuil étant une carte binaire intermédiaire, les sous-étapes suivantes sont réalisées : application d'une transformation morphologique d'érosion en utilisant un masque adapté ; application d'une transformation morphologique de dilation en utilisant le masque de la transformation morphologique d'érosion.
- le procédé comporte une étape supplémentaire de vérification de la cohérence des zones de pixels en mouvement identifiées à l'issue de l'étape de comparaison de deux trames, consistant à déterminer, pour chaque zone en mouvement, un indice de corrélation entre les valeurs des pixels des deux trames, une zone en mouvement étant considérée comme correspondant à une cible lorsque l'indice de corrélation est proche de la valeur -1.
- une zone de pixels en mouvement identifié à l'issue de l'étape de comparaison est affichée d'une manière adaptée en surimpression sur le flux vidéo affiché sur un écran de contrôle.
- le flux vidéo est un flux vidéo dans le domaine spectral visible ou Infra-Rouge.
- le procédé est exécuté en temps réel ou en temps contraint sur le flux vidéo.
- le procédé permet la détection de cibles de faible taille, de l'ordre de quelques pixels.

L'invention a également pour objet un support d'enregistrement d'informations comportant les instructions d'un programme d'ordinateur propres à être exécutées par un ordinateur pour mettre en oeuvre un procédé de détection de cibles au sol et en mouvement dans un flux vidéo acquis par une caméra digitale aéroportée conforme au procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- La figure 1 est un schéma du système dans lequel le procédé selon l'invention est mis en oeuvre ;
- La figure 2 est un schéma blocs du procédé selon l'invention ;
- La figure 3 est une trame courante sur laquelle a été superposée les vecteurs déplacements déterminés au cours du procédé de la figure 2 ;
- La figure 4 représente l'application d'un masque d'érosion, puis d'un masque de dilatation conformément au procédé de la figure 2 ; et,
- La figure 5 représente différentes matrices de pixels à différentes étapes du procédé de la figure 2.

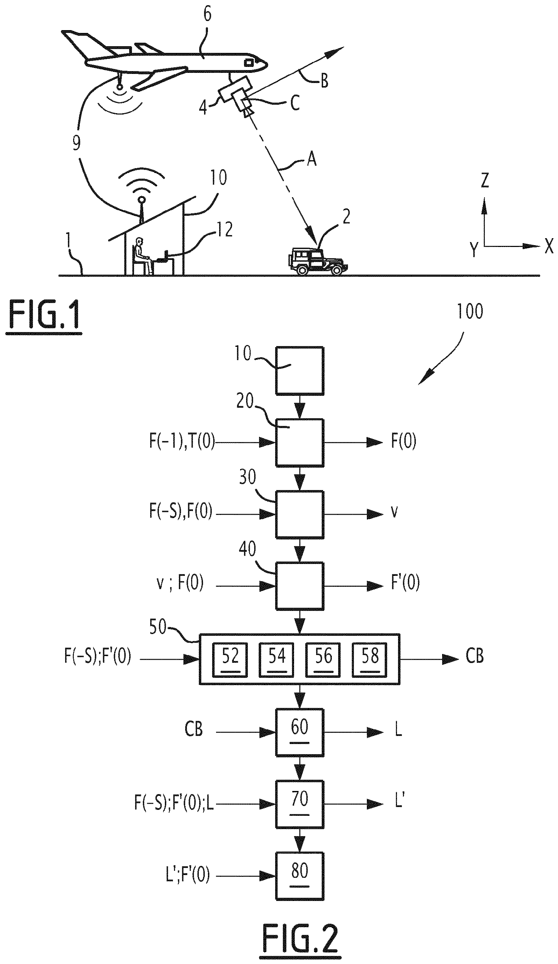

Comme représenté schématiquement sur la figure 1, le procédé selon l'invention permet la détection d'une cible 2, du type constitué par un véhicule en mouvement à la surface du sol 1, dans un flux vidéo acquis par une caméra 4 portée par un aéronef 6.

La caméra 4 permet l'acquisition d'images dans le domaine optique ou infra rouge.

La caméra 4 est une caméra digitale, de sorte que chaque image acquise est une matrice de NxM pixels, dénommée dans ce qui suit trame.

Le flux vidéo acquis comporte par exemple 24 trames par secondes, mais d'autres fréquences d'acquisition sont envisageables.

Au cours de l'acquisition, l'aéronef 6 est mobile par rapport au sol selon six degrés de liberté.

Au cours de l'acquisition, la caméra 4 est mobile par rapport à l'aéronef 6. Par exemple, la camera étant fixée sous l'aéronef 6, elle peut être déplacée selon deux degrés de liberté angulaires. La caméra 6 comporte également un degré de liberté en agrandissement, permettant d'effectuer un zoom sur une zone d'intérêt, au sol.

Ainsi, au cours de la prise de vue, la camera définie par son centre optique C, son axe optique A, et un axe orthogonal à l'axe optique B (permettant d'orienter le plan image de la caméra) se déplace par rapport au sol 1 selon trois coordonnées cartésiennes X, Y et Z et trois coordonnées angulaires. A ces déplacements dans l'espace, il faut ajouter la possibilité d'une variation d'agrandissement w.

Le flux vidéo est transmis à une station au sol 10 par des moyens de télémesure adaptés 9.

La station 10 comporte au moins un ordinateur 12 comportant des moyens de calcul, tels qu'un processeur, et des moyens de mémorisation, tels que des mémoires vive et morte, les moyens de mémorisation stockant les instructions de programmes d'ordinateur propres à être exécutées par les moyens de calcul. En particulier, les moyens de mémorisation stockent un programme permettant, lors de son exécution par les moyens de calcul, de mettre en oeuvre le procédé 100 selon l'invention sur un flux vidéo. De préférence, le programme est exécuté en temps réel sur le flux vidéo brut reçu.

Le procédé 100 de détection de cibles au sol et en mouvement dans un flux vidéo acquis par une caméra aéroportée va maintenant être décrit en référence à la figure 2.

ETAPE 10 d'acquisition d'un flux vidéo

Au cours du vol de l'aéronef 6, la camera 4 réalise une acquisition d'une pluralité de trames successives. Le flux vidéo correspondant est transmis à la station au sol 10.

Le flux vidéo reçu par la station au sol 10 est décomposé en trame T. Chaque trame est étiquetée temporellement et stockée dans les moyens de mémorisation de l'ordinateur 12.

Si T(0) est la trame à l'instant courant $t_0$, T(-1) est la trame précédente, séparée d'un pas de temps égal à l'inverse de la fréquence d'acquisition, f, et T(-s) est la trame passée à l'instant $t_{-s}$ qui est séparée de l'instant courant $t_0$ d'une durée s fois le pas de temps 1/f, s étant un entier naturel.

Pour permettre l'application du procédé selon l'invention en temps réel, environ une trame sur deux du flux vidéo initial est prise en compte. Ainsi la fréquence f des trames utilisées est par exemple de 12 trames par secondes. On constatera que le procédé selon l'invention utilise une pluralité de trames successives, qui ne sont pas forcément des trames consécutives du flux vidéo. De plus, la durée entre deux trames successives n'est pas forcément constante.

ETAPE 20 de correction de l'erreur de parallaxe affectant chaque trame

La première étape de traitement a pour but de transformer un ensemble de s trames successives de manière à les ramener dans un plan de référence commun, fixe par rapport au sol. Avantageusement, ce plan de référence commun est constitué par le plan des coordonnées d'une trame prise comme référence, par exemple la trame T(-s) à l'instant $t_{-s}$.

Cette transformation a pour but de corriger l'erreur relative de parallaxe introduite par le déplacement de la caméra au cours de la durée s, entre les différentes trames.

A priori, le plan de référence ne correspond pas au plan XY du sol 1, c'est-à-dire que le plan d'acquisition de l'image à l'instant $t_{-s}$ n'est pas parallèle au plan XY de la surface du sol. Ainsi, après transformation, une erreur de parallaxe résiduelle commune affectera l'ensemble des s trames considérées. Cependant, si plutôt qu'à l'identification de la vitesse d'une cible, on s'intéresse au simple déplacement de cette cible, cette erreur de parallaxe résiduelle n'a pas de conséquence.

Il est à noter que cette étape de correction permet également de corriger les effets de variation de l'agrandissement w de la caméra et de variation de l'altitude Z de la caméra entre les différentes trames considérées.

La trame corrigée, résultant de la correction de l'erreur relative de parallaxe de la trame T(-i) par rapport à la trame T(-s), est notée F(-i).

Il s'agit alors de traiter la trame courante T(0) pour corriger l'erreur relative de parallaxe.

La correction de l'erreur relative de parallaxe relève des transformations projectives, comportant les translations, les transformations euclidiennes (c'est-à-dire les rotations dans un plan), les similarités (c'est-à-dire les changements d'échelle), les transformations affines et les transformations projectives, ainsi que les combinaisons de ces transformations.

Pour déterminer la transformation projective à appliquer à la trame courante T(0) pour obtenir la trame courante corrigée F(0) correspondante, la trame T(0) est comparée avec la trame corrigée précédente F(-1), qui se trouve déjà ramenée dans le plan de référence commun.

Cette comparaison doit permettre de déterminer la transformation projective M permettant de passer des coordonnées de la trame courante T(0) vers celles de la trame corrigée précédente F(-1).

La matrice de la transformation projective M est définie par :

$$\begin{bmatrix} x' \\ y' \\ w' \end{bmatrix} = M * \begin{bmatrix} x \\ y \\ 1 \end{bmatrix} \iff \begin{bmatrix} x' \\ y' \\ 1 \end{bmatrix} = \frac{1}{w'} * \begin{bmatrix} x' \\ y' \\ w' \end{bmatrix} \qquad (2.7)$$

avec x et y les coordonnées d'un pixel, ou point p, dans la trame courante T(0) ; x' et y' les coordonnées du point p' correspondant dans la trame corrigée précédente F(-1), et w' un facteur d'échelle permettant de compenser le déplacement vertical du porteur et/ou l'agrandissement de la caméra.

Pour déterminer la matrice de la transformation d'image projective M, il faut identifier au moins q points $p_i$ présents dans la trame courante T(0) et que l'on retrouve aux points $p'_i$ dans la trame corrigée précédente F(-1).

Pour ce faire, on applique un algorithme d'identification de points remarquables sur chacune des deux trames considérées et un algorithme d'appariement de points remarquables similaires entre ces deux trames. Par exemple, l'algorithme d'identification correspond à celui mis en oeuvre dans la procédure de HARRIS, qui n'est pas gourment en termes de temps de calculs. Par ailleurs l'algorithme d'appariement est par exemple un algorithme simple permettant de comparer les voisinages entre un point remarquable $p_i$ et l'un des points remarquables $p'_j$ et à sélectionner comme point $p'_i$ correspondant au point $p_i$ le point qui extrémise le critère utilisé.

On détermine ensuite un vecteur déplacement $p_i p'_i$ pour chaque paire de points similaires entre les trames T(0) et F(-1).

Pour trouver la matrice de la transformation d'image projective M à partir des paires ($p_i$ ; $p'_i$) de points similaires, il faut résoudre le système d'équations sur q paires de points, q étant au moins égal à quatre.

$$\begin{aligned} M * p_1 &= p'_1 \\ M * p_2 &= p'_2 \\ &\vdots \\ M * p_n &= p'_n \end{aligned} \qquad (2.8)$$

Ce qui peut s'écrire sous la forme,

$$MP = P' \iff (MP)^T = P'^T \iff P^T M^T = P'^T \qquad (2.9)$$

Avec :

$$P = \begin{bmatrix} p_1 \\ p_2 \\ \vdots \\ p_n \end{bmatrix} \quad P' = \begin{bmatrix} p'_1 \\ p'_2 \\ \vdots \\ p'_n \end{bmatrix}$$

Avec la méthode des moindres carrés, on montre que la solution est donnée par :

$$M^T = (PP^T)^{-1} PP'^T \iff M = ((PP^T)^{-1} PP'^T)^T \qquad (2.10)$$

L'application de la matrice ainsi calculée à l'ensemble des pixels de la trame courante T(0) permet d'obtenir la trame courant corrigée F(0).

ETAPE 30 de détermination du déplacement de la camera par rapport au décor

La détermination du déplacement de la caméra par rapport au sol 1 au cours de la durée s, est réalisée en comparant la trame corrigée passée F(-s) et la trame corrigée courante F(0).

La valeur de l'entier s est choisie suffisamment grande pour pouvoir observer un déplacement des points du sol entre les deux trames comparées.

La valeur de l'entier s est en revanche choisie suffisamment petite non seulement pour retrouver une cible potentielle sur les deux trames comparées, mais surtout pour que les algorithmes utilisés puissent converger relativement rapidement.

La valeur de l'entier s est prise entre 5 et 15 et est de préférence égale à 10.

Lors d'une prise de vue aérienne, la majeure partie de l'image est constituée par des points du sol 1 et non pas par des points des objets en mouvement.

Une grille de points $p_i(-s)$ est placée sur la trame corrigée passée F(-s). Les points de la grille sont par conséquent majoritairement des points correspondant à des points du sol.

L'évaluation du déplacement de ces points, ou flot optique, de la trame corrigée passée F(-s) vers la trame corrigée courante F(0) va permettre d'estimer le vecteur déplacement v, en intensité et en direction, de la camera par rapport au sol (c'est-à-dire au vecteur vitesse résultant de la combinaison des mouvements relatifs de la caméra 4 par rapport à l'aéronef 6 et de l'aéronef 6 par rapport au sol 1, à l'erreur de parallaxe résiduelle près et à l'agrandissement près).

Le calcul du flot optique en chaque point $p_i(-s)$ de la grille est réalisé en mettant en oeuvre par exemple un algorithme dit de Lucas et Kanade.

Cet algorithme suppose que le déplacement d'un point $p_i(-s)$ de la grille entre les trames F(-s) et F(0) est petit et que ce déplacement est approximativement constant pour tout point p appartenant à un voisinage du point $p_i(-s)$ considéré.

Une étude des caractéristiques des pixels autour du point $p_i(-s)$ et la recherche de ces caractéristiques autour de points p peu éloignés du point $p_i(-s)$ dans la trame courante corrigée F(0) permet de déterminer le point $p_i(0)$ de la trame courante corrigée F(0) correspondant au point $p_i(-s)$ de la trame passée corrigée F(-s). Le flot optique au point $p_i(-s)$ est alors donné par le vecteur déplacement reliant les points $p_i(-s)$ et $p_i(0)$.

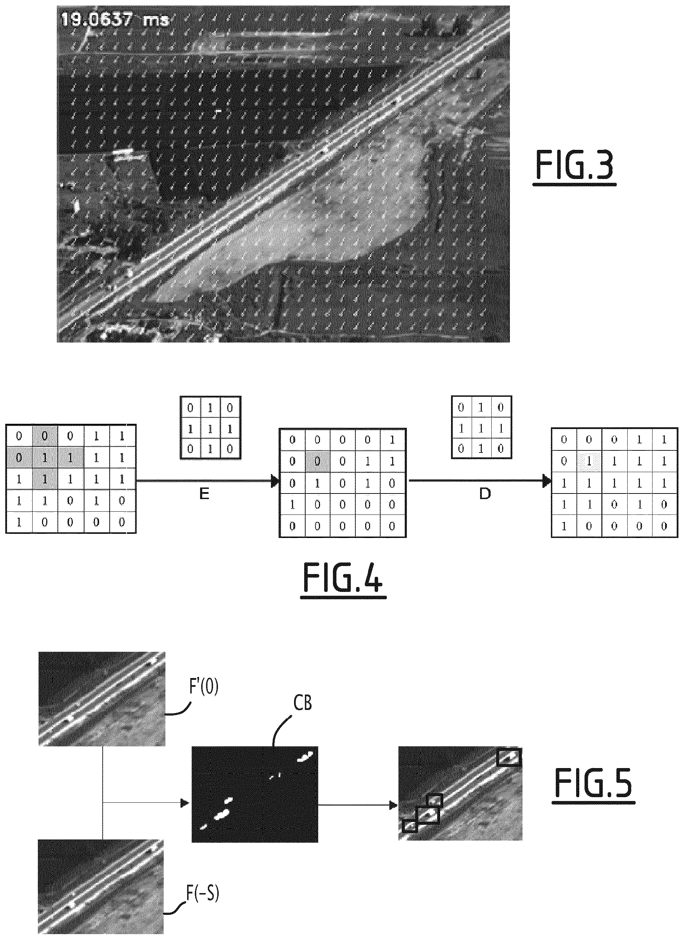

Sur la figure 3, on a représenté une trame passée corrigée F(-s) sur laquelle ont été surimposés les vecteurs déplacement du flot optique obtenu par comparaison avec une trame courante corrigée F(0).

Cette méthode est une méthode locale, qui permet d'obtenir des vecteurs déplacement pour chacun des points de la grille.

Le maximum de la distribution de l'intensité des vecteurs déplacement et le maximum de la distribution de l'orientation des vecteurs déplacement dans le plan XY constituent une estimation respectivement de l'intensité et de la direction dans le plan XY du vecteur déplacement v de la caméra 4 par rapport au décor.

De préférence, le vecteur déplacement v est déterminé à partir de la distribution des vecteurs déplacement par la mise en oeuvre d'un algorithme de RANSAC. Un tel algorithme permet d'estimer le vecteur déplacement v de manière itérative en éliminant progressivement les vecteurs déplacement associés à des points de la grille qui correspondent à des objets en mouvement ou à des erreurs de mesure.

Il est à noter que l'espace entre la grille et la marge de la trame est paramétrable, de manière à éviter que des points de la grille ne sortent du cadre de la trame entre les instants $t_{-s}$ et $t_0$ et viennent ainsi fausser le calcul. Il s'agit en fait de « découper » la bordure de la trame pour être certain de retrouver la vignette centrale de la trame passée corrigée F(-s) dans la trame courante corrigée F(0).

De plus, un tel paramétrage permet de pouvoir maitriser le nombre de points constitutifs de la grille et, par conséquent, de pouvoir réaliser un compromis entre le temps de calcul et la qualité de l'estimation : plus le nombre de points de la grille est petit, plus cette étape convergera rapidement ; plus le nombre de points de la grille est élevé, plus l'estimation du vecteur déplacement v sera précise.

Puisque cette étape met à profit le fait que l'image comporte essentiellement des points du sol, une grille de points distribués de manière homogène peut être utilisée. On obtient ainsi un gain de temps, puisqu'il n'est pas nécessaire de calculer une grille spécifique basée par exemple sur des régions de Harris permettant d'isoler les portions de cette image qui correspondent au sol.

Cet algorithme est efficace car la grille de points permet une sur-représentation des points du sol et donc une identification des maxima de la distribution des vecteurs déplacement comme le déplacement de la caméra par rapport au sol.

ETAPE 40 de compensation du déplacement de la camera

Le vecteur déplacement v de la caméra par rapport au décor permet de construire une matrice de compensation V, du type matrice de translation, pour compenser le déplacement de la caméra entre l'instant $t_{-s}$ initial d'acquisition de la trame F(-s) et l'instant courant $t_0$ final d'acquisition de la trame F(0).

La matrice de compensation V est ensuite appliquée à la trame corrigée courante F(0), de manière à obtenir une trame courante finale F'(0), directement superposable à celle de la trame passée corrigée F(-s) ou trame initiale. Dit autrement, la trame F'(0) est maintenant dans le référentiel de la trame F(-s) et tout ce passe comme si les trames F'(0) et F(-s) avaient été acquises par une caméra statique.

Il faut donc maintenant détecter les régions en mouvement en comparant ces deux trames d'observation d'une même scène, depuis un même point de vue, mais à deux instants différents.

ETAPE 50 d'identification de cibles

L'étape d'identification de cibles en mouvement se décompose en une série de sous-étapes.

Dans une sous étape 52 de soustraction, on réalise une différence absolue des deux trames initiale F'(0) et finale F(-s) pour déterminer, pour chaque pixel, une valeur de distance couleur. Cette valeur représente les changements d'état des pixels entre les deux trames comparées.

Dans la pratique, le bruit du capteur de la caméra 4 altère ces valeurs, c'est-à-dire que deux trames ne seront jamais identiques même dans le cas d'une scène statique. Il faut donc déterminer un seuil m en dessous duquel on considère que la valeur de distance couleur correspond à un simple bruit de fond et au-dessus duquel on considère que cette valeur correspond à une information de mouvement. Le seuil m est paramétrable.

Ainsi, dans l'étape 54 de seuillage, pour chaque pixel, si la valeur de distance couleur est inférieure à ce seuil, la valeur de ce pixel est ramenée à la valeur nulle. En revanche, si la valeur du pixel est supérieure à ce seuil, la valeur de ce pixel est mise à la valeur unité. On obtient ainsi une carte binaire intermédiaire.

Dans la sous-étape 56 une érosion de facteur n est appliquée pour éliminer les parasites pouvant avoir affectés l'acquisition des trames et qui, sur la carte binaire intermédiaire, sont semblables à une impulsion de Dirac. Pour les éliminer, on applique un opérateur morphologique d'érosion E sur la carte binaire intermédiaire, qui correspond à l'application d'un masque binaire sur chaque pixel de la carte binaire, comme cela est représenté à la figure 4. Pour chaque pixel de la carte binaire présentant une valeur positive, si les quatre pixels immédiatement voisins ont également une valeur positive, alors la valeur du pixel considéré reste à la valeur unité 1, sinon elle sera mise à la valeur nulle 0.

L'érosion permet donc d'éliminer les zones de la carte binaire intermédiaire ayant une taille réduite, de l'ordre d'un pixel, et de rogner celles de taille supérieure, de l'ordre de quelques pixels.

Dans la sous-étape 58, pour contrer le second effet de l'érosion, un opérateur morphologique de dilatation D inverse de l'opérateur d'érosion E est appliqué à la carte binaire érodée. Le même masque que celui utilisé à l'étape 56 est utilisé : pour chaque pixel de la carte binaire érodée présentant une valeur positive, les quatre pixels immédiatement voisins sont modifiés pour prendre la valeur unité, quelle que soit leur valeur initiale.

En variante, d'autres types de masques que celui en croix de la figure 4 peuvent être utilisés, par exemple en carré, en cercle, etc. On le choisira selon le type de zone de la carte binaire intermédiaire sur laquelle on l'applique. La taille m du masque est également un paramètre ajustable pour augmenter ou diminuer son rayon d'influence.

Pour la détection d'objets en mouvement de très petite taille, l'érosion va avoir un impact important sur la taille minimale (en nombre de pixels) à partir de laquelle la détection d'une cible sera possible. On prendra donc soin de choisir une taille de masque inférieure à la taille en pixels des objets en mouvement que l'on cherche à détecter.

On obtient finalement une carte binaire CB avec, en valeur positive, les pixels en mouvement. Une telle carte binaire est représentée à la figure 5.

ETAPE 60 détermination de zones de pixels en mouvement

A l'étape 60, un algorithme de détection de contour est appliqué sur la carte binaire de manière à regrouper les pixels en mouvement correspondant à un même objet physique pour définir des zones en mouvement au sein de la carte binaire CB.

Le résultat de cette étape est une liste brute L de zones en mouvement définies par leur contour, chaque contour étant lui-même une liste de coordonnées 2D de pixels.

ETAPE 70 de vérification des résultats

Une étape de vérification du résultat obtenu à l'étape 60 est réalisée pour éliminer les fausses cibles, ou fausses alarmes.

Pour ce faire, est réalisé un calcul de corrélation entre les trames initiale et finale, F(-s) et F'(0), sur chacune des zones en mouvement déterminée à l'issue de l'étape 60.

Il s'agit de calculer un indice de corrélation entre les courbes d'évolution de l'intensité des pixels de chacune des trames sur une même zone en mouvement.

Lorsque l'indice de corrélation est entre -0,5 et 0,5, on considère qu'il n'existe pas de corrélation entre les trames sur la zone en mouvement. Il s'agit en fait d'une zone qui n'évolue pas de la même manière entre les deux trames mais qui ne correspond pas à un objet en mouvement. Par exemple, il peut s'agir d'un arbre bougeant légèrement sous l'effet du vent, ou du mouvement apparent d'un objet proéminent par rapport à son arrière-plan sur l'image. Dans ce cas, la zone considérée est rejetée de la liste L de contours.

Si le résultat est compris entre 0,5 et 1, on considère que la zone est similaire d'une trame à l'autre. La zone considérée n'est en fait pas en mouvement. Elle est donc rejetée de la liste L.

Si le résultat est entre -1 et 0,5, les courbes d'intensité des deux trames ont une évolution différente et opposée, ce qui confirme le déplacement d'un objet propre à modifier les propriétés de la zone considérée d'une trame à l'autre. La zone correspondante est conservée en tant que zone en mouvement dans la liste L.

Cette étape 70 permet d'éliminer des fausses alarmes de la liste brute L et d'obtenir une liste L' « nettoyée ».

Etape 80 d'affichage.

Les zones en mouvement de la liste L' sont affichées en surimpression sur la trame courante T(0) affichée sur l'écran de l'ordinateur 12. Les zones en mouvement sont par exemple identifiées par un polygone contenant intégralement la zone en mouvement correspondante. Ce polygone permet à l'opérateur de focaliser son attention sur la portion de l'image délimitée pour identifier une cible.

Un polygone à l'instant courant $t_0$ est affiché non seulement sur la trame courante T(0) affichée sur l'écran de l'opérateur, mais également sur les trames suivantes du flux vidéo affiché sur l'écran de l'opérateur, et ceci jusqu'à ce qu'une nouvelle trame du flux vidéo, T(+s) par exemple, face l'objet d'une détection de cible par la mise en oeuvre du présent procédé.

Les polygones calculés à l'instant $t_{+s}$ sont alors pris en compte. De manière connue, par la mise en oeuvre d'algorithmes d'appariement, un polygone à l'instant $t_{+s}$ est affiché en remplacement d'un polygone à l'instant $t_0$ s'ils correspondent, avec une forte probabilité, à une même cible ; un polygone à l'instant $t_{+s}$ est affiché en tant que nouveau polygone s'il ne peut être apparié à un polygone à l'instant $t_0$ et s'il correspond, avec une forte probabilité, à une nouvelle cible détectée dans le champ de la caméra ; un polygone à l'instant $t_0$ continue d'être affiché s'il ne peut être apparié avec un polygone à l'instant $t_{+s}$ et qu'il correspond avec une forte probabilité à une cible occultée, c'est-à-dire qui ne serait pas détectée dans la trame T(+s).

VARIANTES

Les points sélectionnés pour corriger l'erreur de parallaxe ou estimer le déplacement de la caméra par rapport au sol doivent appartenir au plan XY du sol avec une erreur limitée. Dans la pratique, il arrive souvent que les calculs effectués dans les étapes correspondantes soient altérés par des valeurs aberrantes. Pour limiter cet effet, la méthode de RANSAC (Random Sample Consensus) permet une élimination de ces valeurs aberrantes de manière itérative, jusqu'à trouver un modèle adapté à l'ensemble des données.

Le traitement des trames pour se replacer dans une acquisition statique comporte deux étapes majeures, la correction de l'erreur relative de parallaxe et l'estimation du déplacement de la caméra par rapport au sol. En variante, ces deux étapes sont réalisées en une seule opération, l'évolution du flot optique pour les points du sol renseignant à la fois sur la vitesse de la caméra par rapport au sol et sur l'erreur relative de parallaxe entre les trames.

AVANTAGES

Le procédé selon l'invention permet de détecter des cibles de faibles tailles (au moins 3 x 3 pixels) et de manière réactive (proche de 40 ms entre l'apparition de l'objet sur les trames et sa détection).

Avantageusement, le procédé selon l'invention permet de détecter des cibles dans un flux vidéo non-géoréférencé. De plus, les informations de position du porteur, par exemple déterminées au moyen d'un système de localisation par satellites du type GPS, ne sont pas utilisées.

**Revendications**

1. Procédé (100) de détection de cibles au sol et en mouvement dans un flux vidéo acquis par une caméra (4) numérique aéroportée, **caractérisé en ce qu'**il comporte les étapes consistant à :

- traiter (20 - 40) une pluralité de trames successives de manière à stabiliser les trames comme si elles avaient été acquises par une caméra fixe comportant une sous-étape (40) de correction d'une erreur relative de parallaxe affectant chaque trame (T(0)) de ladite pluralité de trames successives de manière à obtenir, pour chaque trame (T(0)), une trame corrigée (F(0)), cette sous-étape mettant en oeuvre un algorithme de détermination d'une transformation projective permettant de passer de la trame (T(0)) à un instant courant, $t_0$, à une trame corrigée (F(-1)) associée à une trame (T(-1)) à un instant d'échantillonnage précédent, $t_{-1}$; et,
- comparer (50 - 60) deux trames traitées, séparées temporellement l'une de l'autre, de manière à identifier les zones de pixels en mouvement d'une trame à l'autre, les zones de pixels en mouvement constituant des cibles détectées,

**caractérisé en ce que** l'étape consistant à traiter une pluralité de trames successives comporte une sous-étape (30) de détermination d'un vecteur déplacement (v) de la caméra (4) par rapport au sol (1), cette sous-étape mettant en oeuvre un algorithme de détermination d'un flot optique permettant de passer d'une trame corrigée courante (F(0)) à une trame corrigée passée (F(-s)) séparée de la trame corrigée courante d'un nombre entier s d'instants d'échantillonnage, le nombre entier s étant sélectionné entre 5 et 15, de préférence égal à 10.

2. Procédé selon la revendication 1, dans lequel l'algorithme de détermination d'un flot optique utilise une grille homogène de points.

3. Procédé selon l'une quelconque des revendications 1 à 2, dans lequel une fois déterminé le vecteur déplacement (v) de la caméra (4) par rapport au sol (1), une transformation (V) correspondante est appliquée à la trame corrigée courante (F(0)) pour compenser l'effet du déplacement de la caméra et obtenir une trame finale (F'(0)) superposable à la trame corrigée passée (F(-s)) en tant que trame initiale.

4. Procédé selon la revendication 3, dans lequel l'étape consistant à comparer deux trames consiste à comparer les trames final (F'(0)) et initiale (F(-s)) entre elles en réalisant successivement les sous-étapes suivantes consistant à :

- soustraire pixel à pixel la trame initiale (F(-s)) de la trame finale (F'(0)) de manière à obtenir, pour chaque pixel, une valeur de distance couleur ;
- appliquer un seuil en distance couleur, chaque pixel ayant une valeur de distance couleur inférieure ou égale audit seuil, prenant la valeur nulle et chaque pixel ayant une valeur de distance couleur supérieure audit seuil prenant la valeur unité, de manière à obtenir une carte binaire ; et,
- appliquer un algorithme de détermination de contour sur la carte binaire pour regrouper les pixels de valeur unité en zones de pixels en mouvement.

5. Procédé selon la revendication 4, dans lequel, la carte binaire obtenue à l'issue de la sous-étape d'application d'un seuil étant une carte binaire intermédiaire, les sous-étapes suivantes sont réalisées :

- application d'une transformation morphologique d'érosion en utilisant un masque adapté ;
- application d'une transformation morphologique de dilation en utilisant le masque de la transformation morphologique d'érosion.

6. -Procédé selon l'une quelconque des revendications précédentes, dans lequel le procédé comporte une étape (70) supplémentaire de vérification de la cohérence des zones de pixels en mouvement identifiées à l'issue de l'étape de comparaison de deux trames, consistant à déterminer, pour chaque zone en mouvement, un indice de corrélation entre les valeurs des pixels des deux trames, une zone en mouvement étant considérée comme correspondant à une cible lorsque l'indice de corrélation est proche de la valeur -1.

7. -Procédé selon l'une quelconque des revendications précédentes, dans lequel une zone de pixels en mouvement identifiée à l'issue de l'étape de comparaison est affichée d'une manière adaptée en surimpression sur le flux vidéo affiché sur un écran (12) de contrôle.

8. -Procédé selon l'une quelconque des revendications précédentes, dans lequel le flux vidéo est un flux vidéo dans le domaine spectral visible ou Infra-Rouge.

9. -Procédé selon l'une quelconque des revendications précédentes, exécuté en temps réel ou en temps contraint sur le flux vidéo.

10. -Procédé selon l'une quelconque des revendications précédentes, permettant la détection de cibles de faible taille, de l'ordre de quelques pixels.

11.  -Support d'enregistrement d'informations comportant les instructions d'un programme d'ordinateur propres à être exécutées par un ordinateur pour mettre en oeuvre un procédé de détection de cibles au sol et en mouvement dans un flux vidéo acquis par une caméra (4) numérique aéroportée conforme à l'une quelconque des revendications 1 à 10.

**Patentansprüche**

1.  Verfahren (100) zum Detektieren von Zielen am Boden und in Bewegung in einem von einer fliegenden Digitalkamera (4) aufgenommenem Videodatenstrom, dadurch charakterisiert, dass er die Schritte aufweist bestehend aus:

    - Verarbeiten (20 - 40) einer Mehrzahl von sukzessiven Rahmen auf eine Art zum Stabilisieren der Rahmen, wie wenn sie von einer festen Kamera aufgenommen worden wären, aufweisend einen Unterschritt (40) zum Korrigieren eines relativen Parallaxenfehlers, der sich auf jeden der Mehrzahl von sukzessiven Rahmen (T(0)) auswirkt, auf die Art, dass, für jeden Rahmen (T(0)), ein korrigierter Rahmen (F(0)) erhalten wird, wobei dieser Unterschritt einen Algorithmus zum Ermitteln einer projektiven Transformation ausführt, der es ermöglicht, von einem Rahmen (T(0)) zu einem aktuellen Zeitpunkt, $t_0$, zu einem korrigierten Rahmen (F(-1)) überzugehen, der zu einem Rahmen (T(-1)) zu einem vorhergehenden Abtastzeitpunkt, $t_{-1}$, gehört; und
    - Vergleichen (50 - 60) von zwei verarbeiteten Rahmen, die zeitlich voneinander getrennt sind, in der Art, dass die Bereiche von Pixeln, die von einem Rahmen zum Anderen in Bewegung sind, identifiziert werden, wobei die Bereiche von Pixeln in Bewegung detektierte Ziele bilden,

    dadurch charakterisiert, dass der Schritt, der aus dem Verarbeiten einer Mehrzahl von sukzessiven Rahmen besteht, einen Unterschritt (30) zum Ermitteln eines Bewegungsvektors (v) der Kamera (4) in Bezug auf den Boden (1) aufweist, wobei dieser Unterschritt einen Algorithmus zum Ermitteln eines optischen Flusses durchführt, der es ermöglicht, von einem aktuellen korrigierten Rahmen (F(0)) zu einem früheren korrigierten rahmen (F(-s)) überzugehen, der von dem aktuellen Rahmen durch eine ganze Zahl von Abtastzeitpunkten getrennt ist, wobei die ganze Zahl zwischen 5 und 15 gewählt wird, vorzugsweise gleich 10.

2.  Verfahren gemäß Anspruch 1, in dem der Algorithmus zum Ermitteln eines optischen Flusses ein homogenes Punktgitter verwendet.

3.  Verfahren gemäß einem der Ansprüche 1 bis 2, in dem sobald der Bewegungsvektor (v) der Kamera (4) in Bezug auf den Boden (1) ermittelt ist, eine zugehörige Transformation (V) auf den aktuellen korrigierten Rahmen (F(0)) angewendet wird, um den Effekt der Bewegung der Kamera zu kompensieren und einen endgültigen Rahmen (F'(0)) zu erhalten, der über den früheren korrigierten Rahmen (F(-s)) als Anfangsrahmen gelegt werden kann.

4.  Verfahren gemäß Anspruch 3, in dem der Schritt, der aus dem Vergleichen von zwei Rahmen besteht, aus dem Vergleichen des endgültigen Rahmens (F'(0)) und des Anfangsrahmens (F(-s)) untereinander besteht, wobei sukzessiv die folgenden Unterschritte realisiert werden bestehend aus:

    - Subtrahieren Pixel für Pixel des Anfangsrahmens (F(-s)) von dem endgültigen Rahmen (F'(0)) auf die Art, dass für jeden Pixel ein Farbabstandswert erhalten wird;
    - Anwenden einer Farbabstandsschwelle, wobei jeder Pixel, der einen Farbabstandswert kleiner oder gleich der Schwelle hat, einen Wert Null annimmt und jeder Pixel, der einen Farbabstandswert über der Schwelle hat, einen Einheitswert annimmt, in der Art, dass eine binäre Karte erhalten wird; und
    - Anwenden eines Konturermittlungsalgorithmus auf die binäre Karte, um die Pixel mit Einheitswert in Bereiche von Pixeln in Bewegung umzugruppieren.

5.  Verfahren gemäß Anspruch 4, wobei die binäre Karte, die als Ergebnis des Unterschritts zum Anwenden einer Schwelle erhalten wird, eine binäre Zwischenkarte ist und in dem die folgenden Schritte realisiert werden:

    - Anwenden einer morphologischen Erosions-Transformation unter Verwendung einer angepassten Maske;
    - Anwenden einer morphologischen Dilatations-Transformation unter Verwendung der Maske der morphologischen Erosions-Transformation.

6.  Verfahren gemäß einem der vorhergehenden Ansprüche, in dem das Verfahren einen zusätzlichen Schritt (70) zum Verifizieren der Kohärenz der als Ergebnis des Schritts zum Vergleichen von zwei Rahmen identifizierten Bereiche von Pixeln in Bewegung aufweist, bestehend aus dem Ermitteln, für jeden Bereich in Bewegung, eines Korrelationsindex zwischen den Werten der Pixel der zwei Rahmen, wobei ein Bereich in Bewegung als zu einem Ziel korrespondierend angesehen wird, wenn der Korrelationsindex nahe am Wert -1 ist.

7. Verfahren gemäß einem der vorhergehenden Ansprüche, in dem ein als Ergebnis des Schritts zum Vergleichen identifizierter Bereich von Pixeln in Bewegung auf angepasste Weise eingeblendet in dem auf einem Steuerbildschirm (12) angezeigten Videodatenstrom angezeigt wird.

8. Verfahren gemäß einem der vorhergehenden Ansprüche, in dem der Videodatenstrom ein Videodatenstrom im sichtbaren oder Infrarot-Spektralbereich ist.

9. Verfahren gemäß einem der vorhergehenden Ansprüche, in Echtzeit oder in beschränkter Zeit auf dem Videodatenstrom ausgeführt.

10. Verfahren gemäß einem der vorhergehenden Ansprüche, das die Detektion von Zielen schwacher Größe ermöglicht, von der Ordnung einiger Pixel.

11. Träger zum Speichern von Informationen aufweisend Befehle eines Computerprogramms, die geeignet sind, von einem Computer ausgeführt zu werden, um ein Verfahren zum Detektieren von Zielen am Boden und in Bewegung in einem von einer fliegenden Digitalkamera (4) aufgenommenem Videodatenstrom gemäß einem der Ansprüche 1 bis 10 auszuführen.

**Claims**

1. A method (100) for detecting targets on the ground and in motion, within a video stream that is acquired by an airborne digital camera (4), **characterised in that** it comprises the steps consisting of:

   - processing (20-40) a plurality of successive frames of the video stream in a manner so as to stabilize the frames as if they had been acquired by a fixed camera comprising a sub-step (40) of correcting a relative parallax error affecting each frame (T(0)) of the plurality of successive frames in a manner so as to obtain, for each frame (T(0)), a corrected frame (F(0)), this sub-step implementing an algorithm for determining a projective mapping that makes it possible to pass from a frame (T(0)) at a current time, $t_0$, to a corrected frame (F(-1)) associated with a frame (T(-1)) at a preceding sampling time, $t_{-1}$ ; and,
   - comparing (50-60) two processed frames, temporally separated one from the other, in a manner so as to identify a pixel zone in motion from one processed frame to the other, the pixel zone in motion constituting detected targets,

   **characterised in that** the step consisting of processing a plurality of successive frames includes a sub-step (30) of determining a motion vector (v) of the camera (4) relative to the ground (1), this sub-step step implementing an algorithm for determining an optical flow that makes it possible to pass from a corrected frame at a current time (F(0)) to a corrected frame at a past time (F(-s)) that is separated from the current time by an integer number s of sampling time intervals, the integer number s being selected between 5 and 15, preferably equal to 10.

2. The method according to claim 1, wherein the algorithm for determining an optical flow uses a homogenous grid of points.

3. The method according to any one of claims 1 to 2, wherein, once the motion vector (v) of the camera (4) relative to the ground (1) has been determined, a corresponding transformation (V) is applied to the corrected frame at the current time (F(0)) in order to compensate for an effect of a movement of the camera and obtain a final frame (F'(0)) that may be superimposed on the corrected frame at a past time (F(-s)), considered as being an initial frame.

4. The method according to claim 3, wherein, the step consisting of comparing two processed frames consists of comparing the final frame (F'(0)) and the initial frame (F(-s)) to each other by carrying out successively the following sub-steps:

   - subtracting pixel by pixel the initial frame (F(-s)) from the final frame (F'(0)) in a manner so as to obtain, for each pixel, a color distance value;

- applying a color distance threshold, each pixel having a color distance value that is less than or equal to said color distance threshold, taking the null value, and each pixel having a color distance value that is greater than said color distance threshold taking the unit value, so as to obtain a binary map; and,

- applying a contour determination algorithm on the binary map in order to group together pixels having a unit value into at least one pixel zone in motion.

5. The method according to claim 4, wherein, the binary map obtained at the end of the sub-step of applying a color distance threshold being an intermediate binary map, the following sub-steps are carried out :

- applying a morphological erosion mapping using an appropriate mask;
- applying a morphological dilatation mapping that uses the mask of the morphological erosion mapping.

6. The method according to any one of the preceding claims, wherein the method comprises a supplementary step (70) of verifying a consistency of the pixel zones in motion identified at the end of the step of comparing two processed frames, consisting of determining, for each zone in motion, a correlation index between values of the pixels of the two processed frames, the pixel zone in motion being deemed to correspond to a target when the correlation index is close to the value -1.

7. The method according to any one of the preceding claims, wherein the pixel zone in motion identified ate the end of the comparing step is displayed in an appropriate manner over the video stream displayed on a control monitor (12).

8. The method according to any one of the preceding claims, wherein the video stream is a video stream in a visible spectral domain or an infra-red domain.

9. The method according to any one of the preceding claims, executed in real time or in constrained time on the video stream.

10. The method according to any one of the preceding claims, making possible to detect a target of a small size, of a few pixels.

11. A data recording medium for recording information that contains computer program instructions suitable for being executed by a computer in order to implement the method for detecting targets on the ground and in motion, within a video stream that is acquired by an airborne digital camera (4) according to any one of the claims 1 to 10.

FIG.1

FIG.2

FIG.3

E                                                    D

FIG.4

F'(0)

CB

F(-S)

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J DALE et al.** Target Tracking, Moving Target Detection, Stabilisation and Enhancement of Airbone Video. *proceedings of SPIE Airborne Intelligence, Surveillance, Reconnaisance (ISR), Systems and Applications II,* 03 Juin 2005, vol. 5787, 154-165